# EUROPÄISCHE PATENTSCHRIFT

(11) **EP 2 156 060 B1**
(45) Veröffentlichungstag und Bekanntmachung des Hinweises auf die Patenterteilung: **09.11.2011**
(21) Anmeldenummer: 08758409.0
(22) Anmeldetag: 08.05.2008
(51) Int. Cl.: F16B 7/04

(54) **BEFESTIGER ZUM LÖSBAREN VERBINDEN EINES PROFILS AN EIN GEGENPROFIL**
FASTENER FOR DETACHABLY CONNECTING A PROFILE TO A COUNTERPROFILE
DISPOSITIF DE FIXATION PERMETTANT D'ASSEMBLER UN PROFILÉ ET UN CONTRE-PROFILÉ DE FAÇON LIBÉRABLE

(30) Priorität: 11.06.2007 DE 102007027381; 06.12.2007 DE 102007059172
(43) Veröffentlichungstag der Anmeldung: 24.02.2010
(73) Patentinhaber: Vieler International GmbH & Co. KG, 58642 Iserlohn (DE)
(72) Erfinder: HACKENBERG, Dieter, 58453 Witten (DE); VIELER, Gerd, 58642 Iserlohn (DE)
(74) Vertreter: Patentanwälte Buse, Mentzel, Ludewig
(86) Internationale Anmeldenummer: PCT/EP2008/003682
(87) Internationale Veröffentlichungsnummer: WO 2008/151697

(56) Entgegenhaltungen:
- WO-A-97/25536
- DE-C1- 3 607 849
- US-A- 3 654 879

## Beschreibung

Die Erfindung richtet sich auf einen Befestiger zum lösbaren Verbinden eines Profils an ein Gegenprofil. Das Gegenprofil besitzt eine hinterschnittene Nut und das Profil eine Aufnahme für ein Gehäuse des Befestigers. Im Gehäuse ist ein Exzenterbolzen drehgelagert, der außer einer im Gehäuseinneren befindlichen Exzenterscheibe auch noch einen aus dem Gehäuse herausragenden Bolzenkopf aufweist, der zur Drehbetätigung des Exzenterbolzens dient. Im Gehäuse befindet sich eine Platte, die von der Exzenterscheibe zwischen einer Ausschublage und einer Einschublage längsverschieblich ist. Am Außenende der Platte ist mindestens ein Haken angeordnet, der aus dem Gehäuse herausragt. Es gibt eine geneigt zur Längsverschiebung verlaufenden Schräge an der Platte, die sich an einer Berührungsstelle des Gehäuses abstützt. Das hat zur Folge, dass beim Einschieben der Haken quer hinter die Nutwand im Gegenprofil fährt. Ein Innenabschnitt an der Platte wird vom Exzenterbolzen durchsetzt.

Ein derartiger Befestiger ist aus der DE 31 28 595 bekannt. Das bekannte Gehäuse des Befestigers ist, abgesehen von Durchbrüchen zum Zusammenbau seiner einzelnen Bestandteile und zu ihrer Betätigung, als Kasten mit wenigstens bereichsweise allseitigen Wänden ausgebildet und musste daher im Spritzgussverfahren, z.B. durch Zink-Druckguss, hergestellt werden.

Obwohl sich der bekannte Befestiger bewährt hat, macht sich in manchen Anwendungsfällen bei ihm eine unzureichende Festigkeit bemerkbar. Auch die Kosten zur Herstellung und Montage des Befestigers sind unerwünscht hoch.

Einen anderen Befestiger zeigt die WO 97/25536, nämlich eine Klemmvorrichtung zum lösbaren Verbinden zweier Profilstücke. Das Gehäuse dieser Vorrichtung ist jedoch aus mehreren einzelnen Bestandteilen zusammengesetzt, welche mit einem relativen hohen Aufwand entsprechend zusammengesetzt werden müssen. Das Zusammensetzen geschieht durch Schrauben oder Nieten, wobei ebenfalls eine unzureichende Festigkeit entsteht. Durch die Montage sind jedoch auch hier die Kosten unerwünscht hoch.

Gleiches gilt für die Befestigungsvorrichtung der DE 3 607 849. Bei dieser Vorrichtung sind die Seitenwände offen ausgeführt, was zu einem weiteren Stabilitätsverlust wie in den vorher genannten Vorrichtungen führt. Die hohen Kosten einer Montage durch den mehrteiligen Aufbau des Gehäuses sind hier ebenfalls vorhanden.

Der Erfindung liegt die Aufgabe zugrunde, einen Befestiger der im Oberbegriff des Anspruches 1 angegebenen Art zu entwickeln, der preiswert ist und sich durch eine hohe Festigkeit auszeichnet. Dies wird erfindungsgemäß durch die im Anspruch 1 angegebenen Maßnahmen erreicht, denen folgende besondere Bedeutung zukommt.

Bei dem erfindungsgemäßen Befestiger ist das einstückige Gehäuse eine beidendig offene Hülse, die durch mehrfaches Abkanten eines Blechzuschnitts entsteht. Als Material für den Blechzuschnitt kann zwar ein geeigneter Werkstoff ausreichend hoher Festigkeit genutzt werden. Besonders bewährt hat sich hier Stahl. Die beim Abkanten der Hülse entstehenden aneinanderstoßenden Blechenden des Blechzuschnitts werden miteinander verbunden, wobei die Verbindung einer beim Überdrehen der Exzenterscheibe sich ergebenden Ausweitung der Hülse entgegengerichtet ist. Dadurch wird ein Aufbiegen der Abkantungen vom Blechzuschnitt in der Hülse verhindert und die Form der Hülse stabilisiert. Dies wirkt sich in einer überraschend hohen Festigkeit aus. Um eine Berührungsstelle für die Platten-Schräge zu erzeugen, ist mindestens an dem vorderen Hülsenende wenigstens eine erste Abwinkelung von Wandendstücken vorgesehen.

Eine preiswerte Herstellung der Hülse bei hoher Festigkeit lässt sich dann erreichen, wenn die beiden Blechenden durch Formschluss zusammengehalten werden und, wie es Anspruch 1 vorschlägt, ausgebildeten zwei in Hülsenlängsrichtung verlaufende Kanten aufweisen, die ein zueinander komplementäres hinterschnittenes Randprofil besitzen. Es liegt dann eine flächenbündige formschlüssige Verbindung vor. Man erhält einen raumsparenden glatten Hülsenumriss, der sich problemlos in eine entsprechend klein dimensionierte Aufnahme im zu verbindenden Profil einführen lässt.

In einem Ausführungsbeispiel ist am Innenende der Platte eine Blattfeder angeordnet, die den Bolzenkopf quer zur Längsverschiebungs-Richtung aus der Hülse herausdrückt. Es entsteht dadurch eine quergerichtete, am Bolzenkopf wirksame Querkraft. Dadurch ist eine sogenannte "Druckknopf-Montage und -Demontage" möglich. Das freie Ende der Blattfeder stützt sich an einer Hülseninnenfläche ab und gleitet beim Längsverschieben der Platte entlang dieser Stützfläche. Beim Längsverschieben nimmt das Blattfederende zwei extreme Positionen ein. Es gibt eine Ausgangsposition, die in der Ausschublage der Platte vorliegt. Dann aber auch eine Endposition, welche die Einschublage der Platte kennzeichnet. Die Besonderheit an diesem Ausführungsbeispiel besteht darin, die Stützfläche für das Blattfederende wenigstens bereichsweise mit einer ansteigenden Rampe zu versehen, die in Richtung der Endposition ansteigt. In der Endposition liegt das Blattfederende auf der Rampe auf. Zwischen der geneigten Blattfeder und der Rampe entsteht eine längsgerichtete, im Ausschubsinne wirksame Längskraft, die auf die Platte wirkt. Letzteres hat folgende Bedeutung.

Aus Festigkeitsgründen besteht vorzugsweise sowohl die Hülse als auch die Platte mit ihren Haken und ihren Schrägen aus Stahl. Bei der Ausschubbewegung der Platte gibt es Probleme zwischen den Plattenschrägen und ihren Gehäuse-Berührungsstellen. Durch ungünstige Reibungswerte gleiten die Plattenschrägen nur schwergängig an den Hülsen-Berührungsstellen. So kommt es zu Betriebsstörungen, wenn man die Haken an der Platte aus ihrer Einschublage in eine Ausschublage überführen will. Weil aber erfindungsgemäß eine im Ausschubsinne wirkende Längskraft auf die Platte erzeugt wird, kann diese die Gleitbewegung der Plattenschräge an der Hülsen-Berührungsstelle fördern. Diese Längskraft unterstützt die von der Exzenterscheibe erzeugte Schubkraft. Die Mittel für diese Längskraft von der Platte gleichsam selbst erzeugt, nämlich durch die Berührung zwischen der geneigten Blattfeder und der Rampe. Weil sich eine solche Rampe einfach durch eine Delle in der Hülsenwand erzeugen lässt, benötigt die Erfindung weder zusätzliche Bauteile noch zusätzlichen Platz. Weder die Handhabung noch die Montage oder Demontage werden durch die vorgenannten erfinderischen Maßnahmen beeinträchtigt. Entscheidend ist, dass der erfindungsgemäße Befestiger, wie gesagt, leichtgängig betätigbar ist und zuverlässig wirkt.

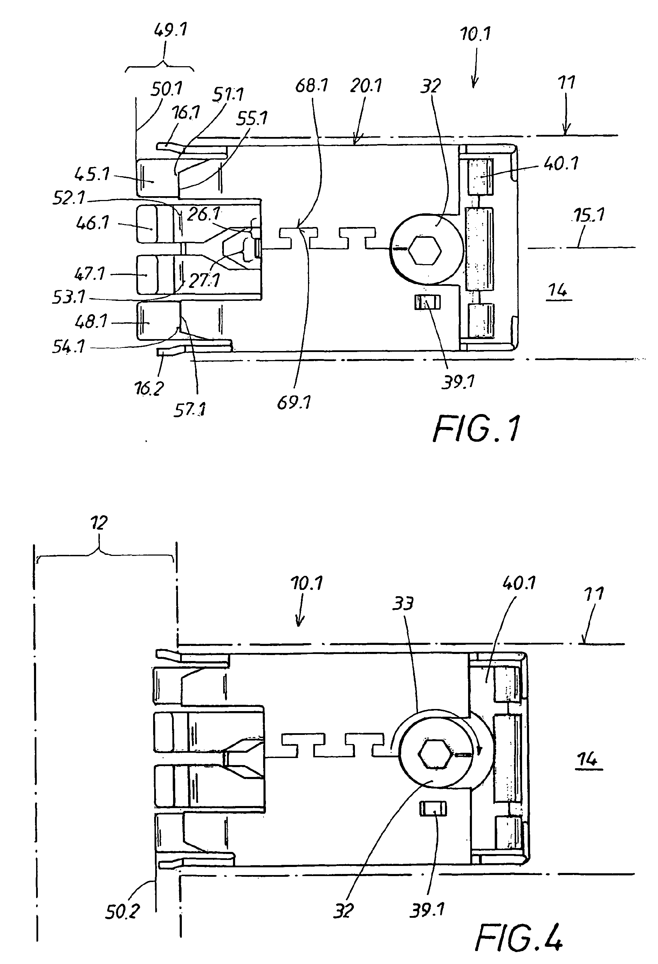

Weitere Maßnahmen und Vorteile der Erfindung ergeben sich aus den weiteren Ansprüchen, der Beschreibung und den Zeichnungen. In den Zeichnungen ist die Erfindung in vier Ausführungsbeispielen dargestellt. Es zeigen die Fig. 1 bis 14 ein erstes Ausführungsbeispiel, wo die Platte des Befestigers in Ihrem äußeren Endbereich in vier Zungen mit vier Haken gegliedert ist und dafür einen 4-Haken-Befestiger bildet. Im Einzelnen zeigen:
- Fig. 1 bis 3: die Vorderansicht, die Rückansicht und die Draufsicht auf einen solchen 4-Haken-Befestiger, wenn sich seine Platte in einer Ausschublage befindet.
- Fig. 4 bis 6: zeigen den gleichen 4-Haken-Befestiger in den analogen Vorder-, Rück- und Draufsichten, wenn die Platte sich in ihrer Einschublage im Gehäuse befindet,
- Fig. 7: zeigt die Draufsicht auf die demontierte Platte des 4-Haken-Befestigers von Fig. 1 bis 6,
- Fig. 8: die Draufsicht auf die Platte von Fig. 7,
- Fig. 9: eine perspektivische Ansicht der Platte von Fig. 7 oder 8,
- Fig. 10: einen Längsschnitt durch das Gehäuse des in Fig. 1 bis 6 gezeigten 4-Haken-Befestigers längs der Schnittlinie X - X von Fig. 11,
- Fig. 11: eine Draufsicht auf die in Fig. 10 gezeigte Hülse,
- Fig. 12: eine Querschnittansicht der in Fig. 11 gezeigten Hülse längs der dortigen Schnittlinie XII - XII,
- Fig. 13: eine perspektivische Darstellung der in Fig. 10 bis 12 gezeigten Hülse und
- Fig. 14: eine ebene Abwickelung eines Blechzuschnitt zur Herstellung des Gehäuses, wobei die Abkantungen bzw. Biegelinien im Zuschnitt durch Strichpunktlinien veranschaulicht sind.

Die Fig. 15 bis 18 zeigen einzelne Bauteile einer alternativen Ausführung des erfindungsgemäßen Befestigers, dessen Platte zwei Zungen mit zueinander gegensinniger Verkröpfung in der Platten-Schräge und mit zueinander gegensinniger Biegung der Haken aufweist. Ein solcher 2-Haken-Befestiger ist in den Zeichnungen nicht näher dargestellt, wohl aber seine Bestandteile. Die Zeichnungen zeigen:

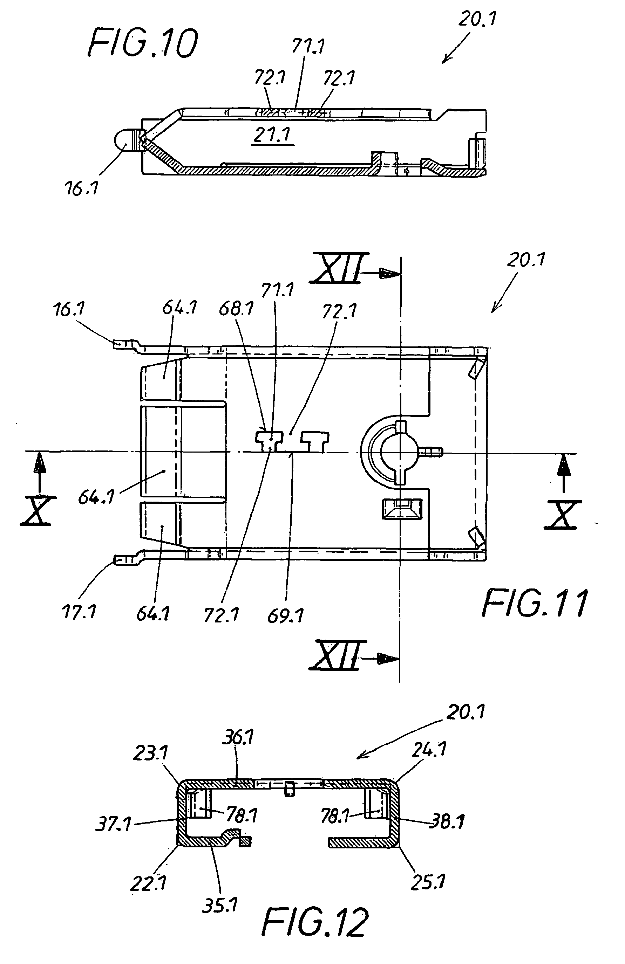

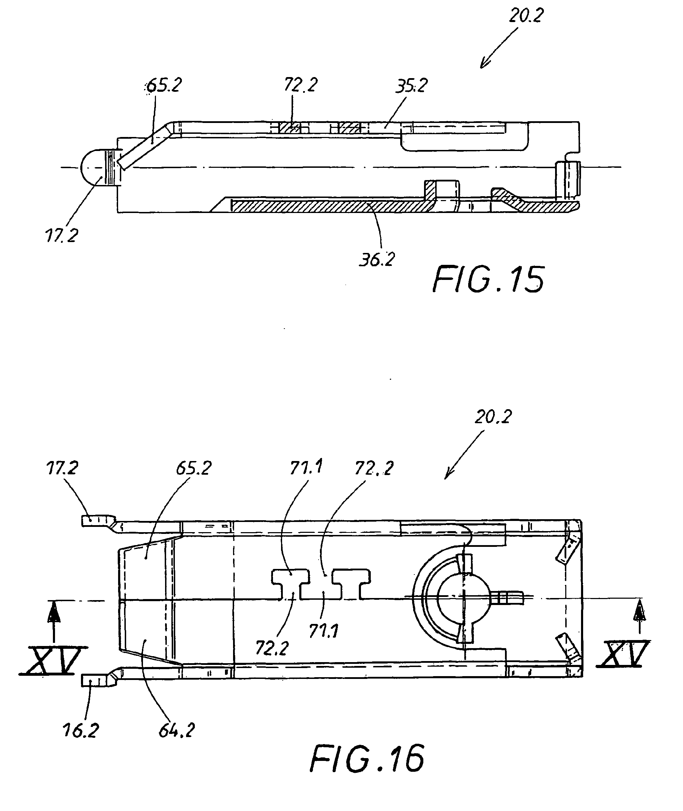

- Fig. 15: in Analogie zu Fig. 10 einen Längsschnitt durch ein zugehöriges Gehäuse eines solchen 2-Haken-Befestigers längs der Schnittlinie XV-XV von Fig. 16,
- Fig. 16,: in Analogie zu Fig. 11, die Vorderansicht einer das Gehäuse bildenden Hülse,

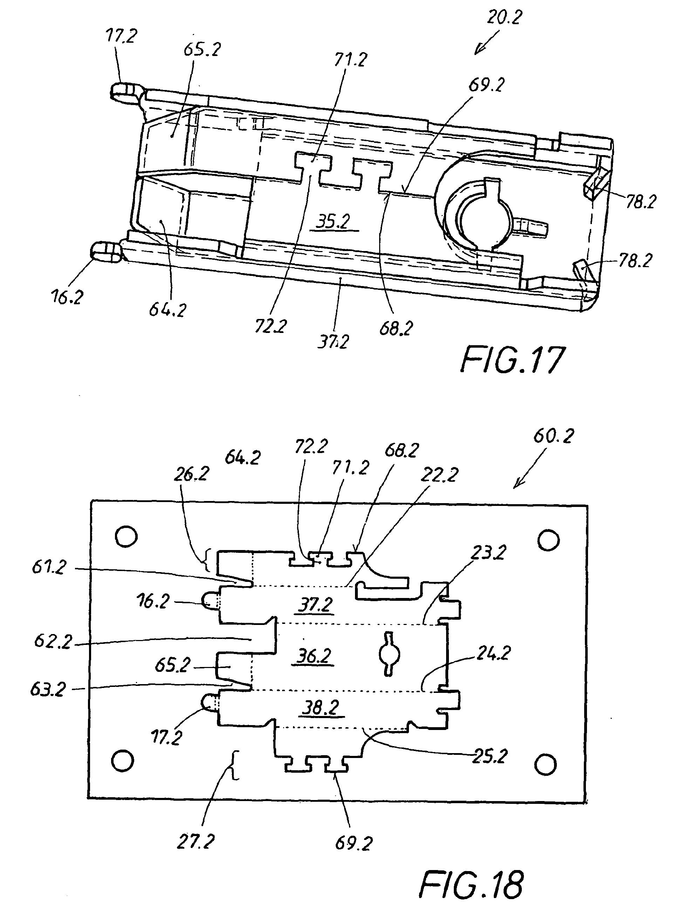

- Fig. 17: eine perspektivische Darstellung der in Fig. 15 und 16 gezeigten Hülse in einem demgegenüber verkleinerten Maßstab und

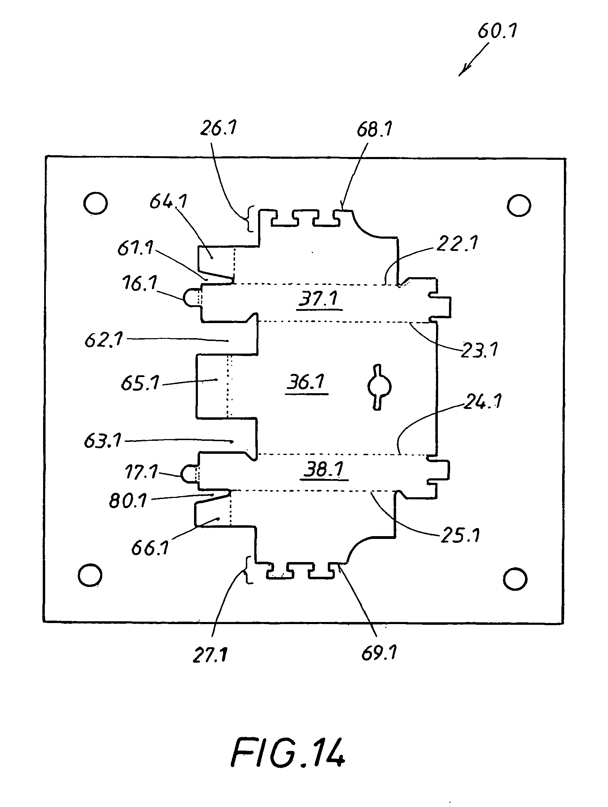

- Fig. 18,: in Analogie zu Fig. 14, eine ebene Abwickelung des Blechzuschnitts, aus welchem durch Abkantungen und Biegungen die aus den Fig. 15 bis 17 ersichtliche Hülse erzeugt worden ist.

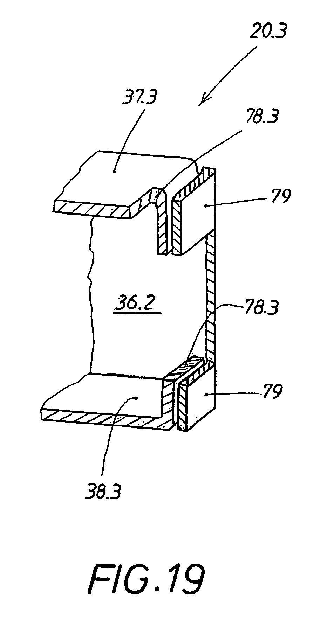

Weiterhin ist ein drittes Ausführungsbeispiel der Erfindung gezeigt in
- Fig. 19,: wo lediglich das hintere Hülsenende perspektivisch dargestellt ist und zwar in Form von Doppel-Abwinkelungen, die eine besonders formfeste Stütze im Befestiger erzeugt, auf welche in der Einschublage das Innenende der Platte auffährt und dadurch die im Anspruch 13 erwähnte Druckknopfbetätigung des Bolzenkopfs blockiert. So ist eine Demontage des Befestigers aus dem ihn aufnehmenden Profil zuverlässig verhindert.

Zuletzt ist ein viertes Ausführungsbeispiel gezeigt und zwar mit einer Rampe an der Stützfläche für das Blattfederende:

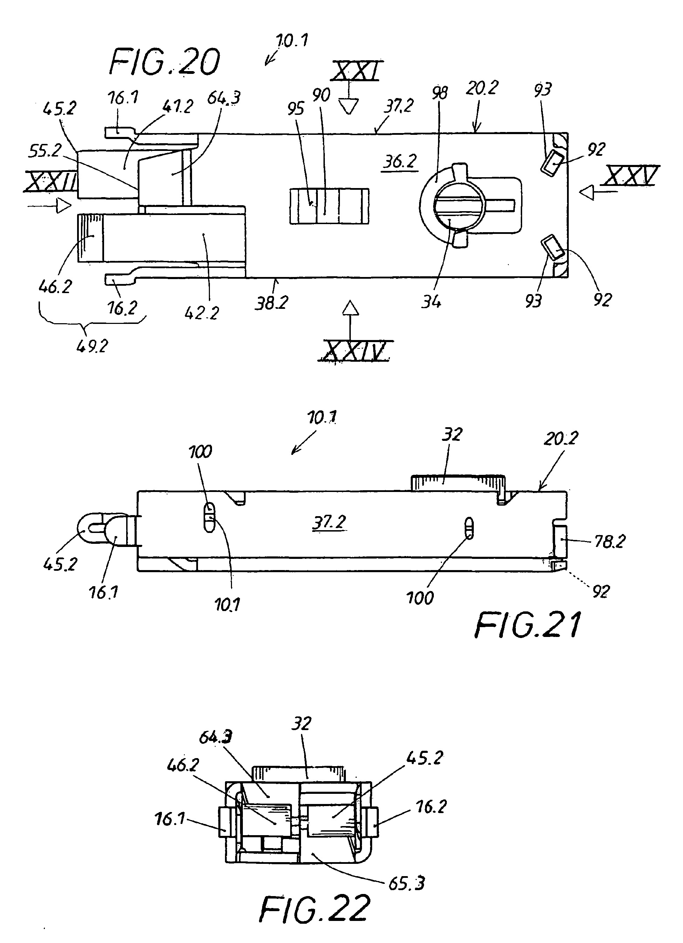

- Fig. 20: die Rückansicht des erfindungsgemäßen Befestigers vor seiner Montage in einer Aufnahme des Profils,
- Fig. 21: eine Draufsicht auf die eine Schmalseite der Hülse in Blickrichtung des Pfeils II von Fig. 1,
- Fig. 22: eine erste Endansicht des Befestigers von Fig. 1 auf das mit den Haken versehene Ende in Blickrichtung des Pfeils III von Fig. 1,

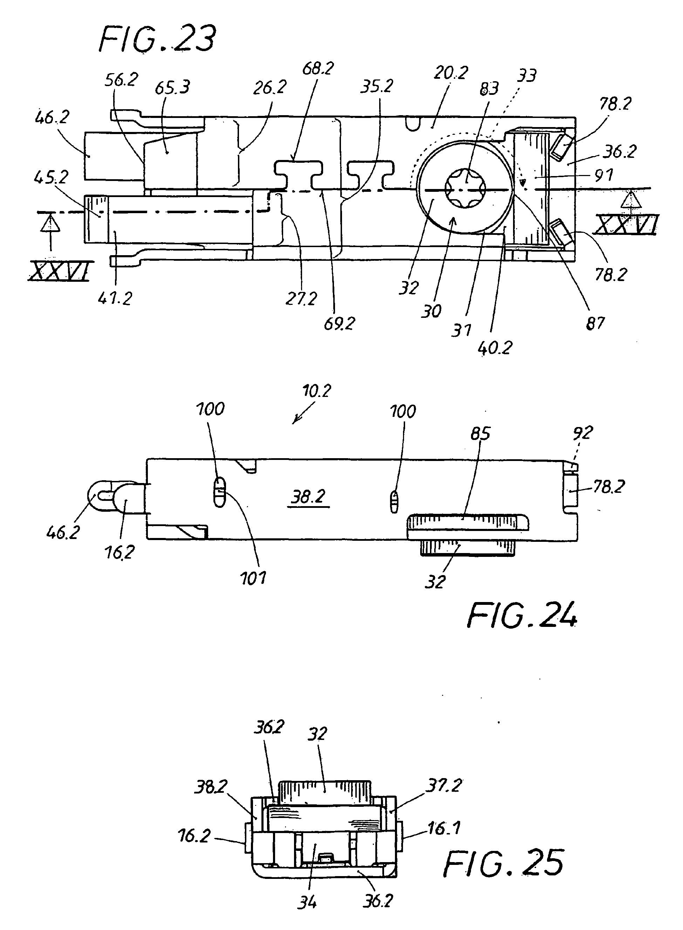

- Fig. 23: eine Vorderansicht des in Fig. 1 gezeigten Befestigers auf die in Fig. 1 nicht sichtbare Breitseite der Hülse,
- Fig. 24: die Draufsicht auf eine zweite Schmalseite des Befestigers von Fig. 1 in Blickrichtung des dortigen Pfeils V,
- Fig. 25: eine Draufsicht auf das hintere, mit dem Exzenterbolzen versehene Ende des in Fig. 1 gezeigten Befestigers, und zwar in Blickrichtung des dortigen Pfeils V,

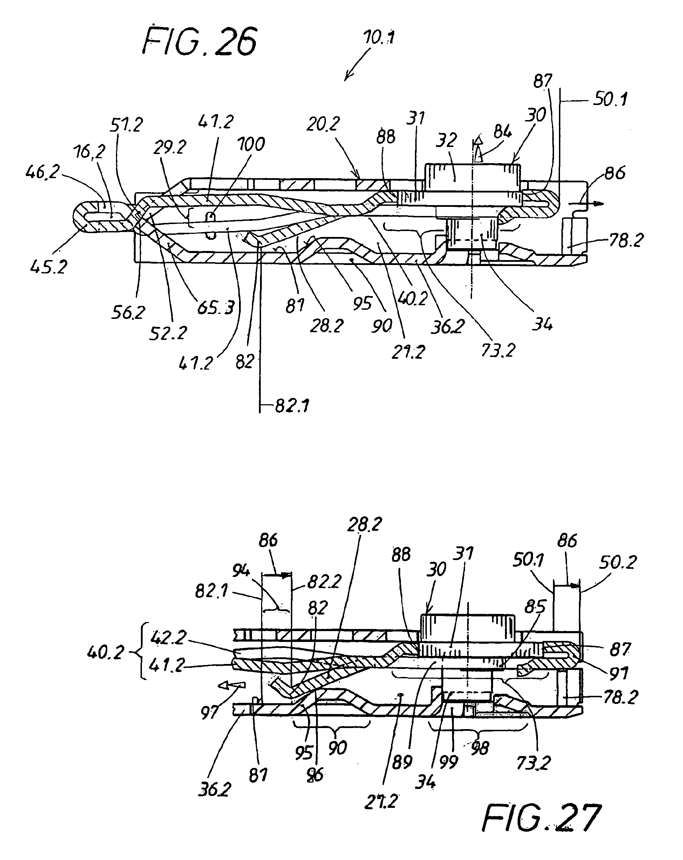

- Fig. 26: einen Längsschnitt durch den Befestiger von Fig. 4 längs der dortigen versprungenen Schnittlinie VII - VII, wenn sich die mit den Haken versehene Platte in ihrer Einschublage befindet, und

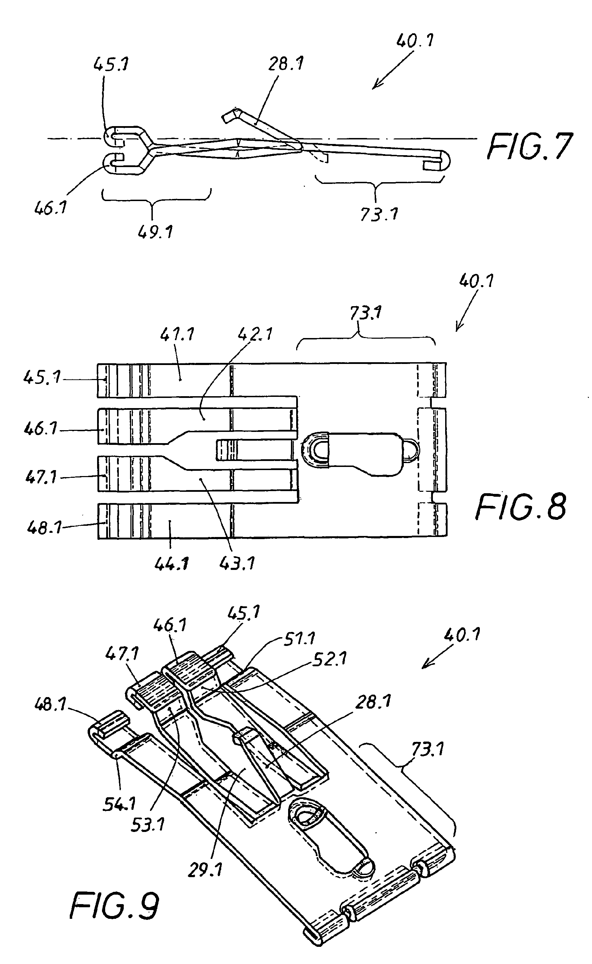

- Fig. 27: den hinteren Bereich des in Fig. 7 gezeigten Längsschnitts, wenn sich die mit Haken versehene Platte in ihrer endgültigen Einschublage befindet.

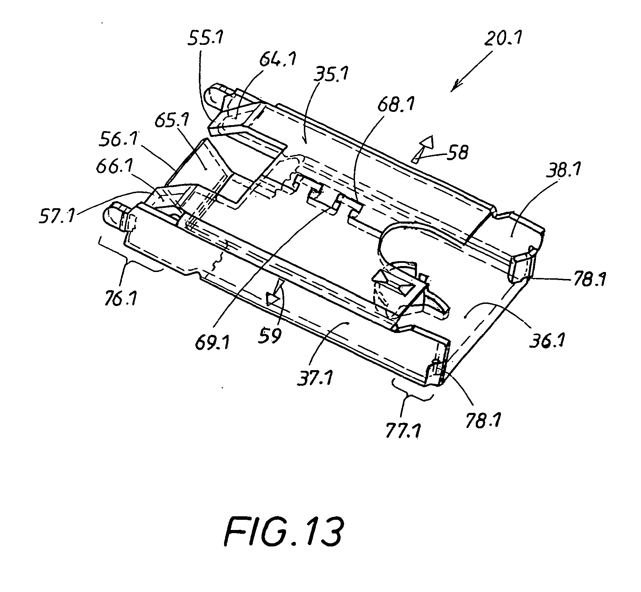

Der Befestiger 10.1 besteht aus zwei Teilen, nämlich aus dem in Fig. 14 ersichtlichen Blechzuschnitt 60.1 und aus der in Fig. 9 ersichtlichen Platte 40.1. Der Blechzuschnitt 60.1 ist einstückig geformt und wird durch Biegen an den Kanten 22.1, 23.1, 24.1, 25.1 zu einer Hülse 20.1 geformt, die in Fig. 13 zu sehen ist.

Für den besseren Halt nach dem Biegen besitzt der Blechzuschnitt 60.1 an den Blechenden 26.1, 27.1 speziell geformte Kanten 68.1, welche mit den entsprechenden Gegenstücken 69.1 in Wirkverbindung gebracht werden können, um den Blechzuschnitt nach dem Biegen formschlüssig zu halten. Die gemeinsame Ebene für den Formschluss ist die Breitwand 35.1 der Hülse 20.1. In einem anderen Ausführungsbeispiel kann jedoch auch der Formschluss in zwei Ebenen geschehen, wobei die eine Ebene von der Breitwand (35.1) der Hülse (20.1) und die andere Ebene von ihrer angrenzenden Schmalwand (37.1) gebildet wird.

Um die Platte 40.1 in dem Blechzuschnitt 60.1 zu halten sind die Endlappen 64.1, 65.1, 66.1 vorgesehen, die in gegensätzliche Richtungen gebogen werden, um die Bewegungsfreiheit der Platte 40.1 im Blechzuschnitt 60.1 zu begrenzen. Auf der gegenüberliegenden Seite wird die Bewegungsfreiheit der Platte 40.1 durch die Abwinkelungen 78.1 begrenzt. Die Abwinkelung 78.1 des Blechzuschnitts 60.2 wird dabei von einer Wandverlängerung der Schmalwand 37.1, 38.1 der Hülse 20.1 erzeugt.

Ein derart montierter Befestiger 10.1 ist in Fig. 1 gezeigt. Sinngemäß wird dieser Befestiger 10.1 in ein Profil 11 eingeführt um dieses anschließend mittels des Befestigers 10.1 an einem Gegenprofil 12 zu halten. Dazu ist die Platte 40.1 beweglich in der aus dem Blechzuschnitt 60.1 geformten Hülse 20.1 gelagert und kann in Hülsenlängsrichtung 15.1 verschoben werden.

Zur besseren Führung des Befestigers 10.1 an einem Gegenprofil 12 besitzt die Hülse 20.1 abgekantete Hülsennasen 16.1, 16.2, welche an dem gleichen Außenende 49.1 der Hülse 20.1 angebracht sind, an der auch die Haken 45.1, 46.1, 47.1, 48.1 der Platte 40.1 angebracht sind. Diese Haken sind gegensinnig angeordnet, um in ein entsprechendes Gegenprofil 12 fest eingreifen zu können und dann den Befestiger 10.1 in der Aufnahme 14 des Profils 11 mit dem Profil 11 an einem entsprechenden Gegenprofil 12 zubefestigen. Die Haken 45.1, 46.1, 47.1, 48.1 greifen dabei in eine hinterschnittene Nut 13 an dem Gegenprofil 12 ein.

Beim Festziehvorgang, welcher in Fig. 4 dargestellt ist, wird der Bolzenkopf 32 des Exzenterbolzens 30 gedreht. Durch die unter dem Bolzenkopf 32 sitzende Exzenterscheibe 31 wird die Platte 40.1 des Befestigers 10.1 in Längsrichtung so verschoben, dass die Haken 45.1, 46.1, 47.1, 48.1 das Gegenprofil 12 zum Profil 11 heranziehen. Der Weg der Exzenterscheibe 31 ist durch einen Innenvorsprung 39.1 am Befestiger 10.1 begrenzt, so dass der Bolzenkopf 32 nicht durchgehend gedreht werden kann. Dieser Innenvorsprung 39.1 kann z.B. aus einer Sicke in der Breitwand 35.1 der Hülse 20.1 bestehen. Um die Haken 45.1, 46.1, 47.1, 48.1 bei der Längsbewegung zur Hilfe des Einhakens im Gegenprofil 12 unterstützend zu spreizen, besitzt die Hülse 20.1 abgekantete Schrägflächen 51.1, 52.1, 53.1, 54.1, welche beim Zusammenwirken mit den Zungen 41.1, 42.1, 43.1, 44.1 der Platte 40.1 die am Ende dieser Zungen befindlichen Haken spreizen. Dieses Zusammenwirken der Schrägflächen 51.1, 52.1, 53.1, 54.1 mit den Zungen 41.1, 42.1, 43.1, 44.1 geschieht über die entsprechenden Berührungsstellen 55.1, 56.1, 57.1.

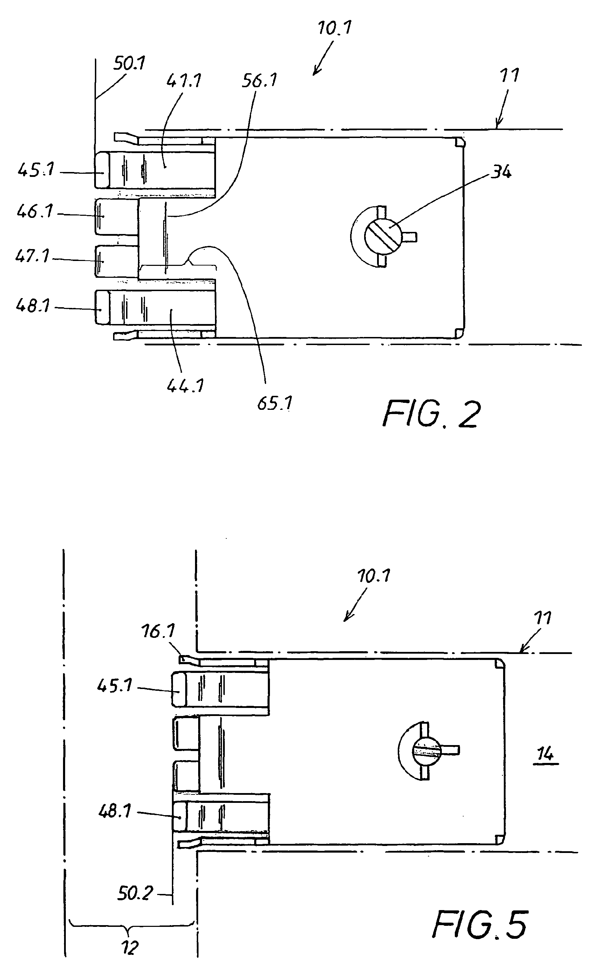

Fig. 2 und Fig. 5 verdeutlichen das in Fig. 1 und Fig. 4 Gezeigte noch einmal von der Gegenseite. Aus dieser Ansicht ist der Lagerzapfen 34 des Exzenterbolzens 30 zu sehen, welcher durch die Drehbetätigung 33 den Befestiger 10.1 von der Offenlage aus Fig. 1 bzw. Fig. 2 in die geschlossene Lage aus Fig. 4 bzw. Fig. 5 überführt. Hierbei ist auch noch einmal deutlich die Ausschublage 50.1 und die Einschublage 50.2 gezeigt.

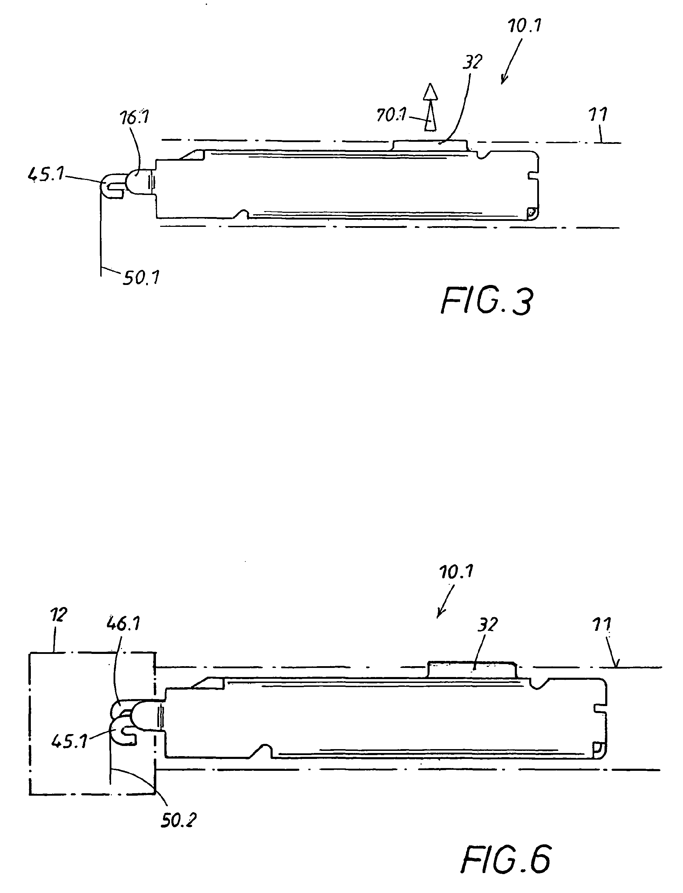

Fig. 3 und 6 verdeutlichen die Einschublage 50.2 bzw. die Ausschublage 50.1 nochmals in Seitenansicht. Hierbei ist zusätzlich zu erkennen, dass beim Festziehen des Befestigers durch den Exzenterbolzen 30 gleichzeitig eine Federbelastung 70.1 quer zum Profil 11 aufgebaut wird, welche den Befestiger im Profil 11 hält.

In den Fig. 7 bis 9 wird nun die Platte 40.1 getrennt von der Hülse 20.1 betrachtet und dies in Seiten-, Front- und perspektivischer Ansicht. Hierbei ist zusätzlich zu den Zungen 41.1, 42.1, 43.1, 44.1 eine Blattfeder 28.1 zu erkennen, welche dazu dient, die oben erwähnte Querkraft 70.1 zum Profil 11 beim Festziehen des Befestigers 10.1 zu ermöglichen. Außerdem ist in diesen drei Fig. deutlich der Platteninnenabschnitt 73.1 zu sehen, welche am gegenüberliegenden Ende vom Außenende 49.1 angeordnet ist.

In die Fig. 10, 11 und 12 ist in gleicher Weise, wie bei den Fig. 7, 8 und 9, diesmal die Hülse 20.1 in drei Ansichten einzeln dargestellt. Diese drei Ansichten erlauben einen Einblick auch in das Hülseninnere 21.1 der Hülse 20.1. Deutlich sind hier noch einmal die ineinander greifenden Kanten 68.1, 69.1 dargestellt, die hier als verbreiterter Kopf 71.1 bzw. verengter Hals 72.1 dargestellt sind.

Mit zusätzlichem Bezug auf Fig. 13 und Fig. 14 sind hier auch deutlich die nach dem Biegen des Blechzuschnittes 60.1 entstehenden Breitseiten 35.1, 36.1 und die dazugehörigen Schmalseiten 37.1, 38.1 gezeigt. In diese Hülse 20.1 wird dann die Platte 40.1 mit dem Platteninnenabschnitt 73.1 und dem Plattenausschnitt 29.1 an dem die Haken 45.1, 46.1, 47.1, 48.1 sich befinden eingelegt. In Fig. 13 ist zusätzlich noch zu erkennen, dass beim Festdrehen des Exzenterbolzens 30 eine Aufweitung der Schmalseiten 37.1, 38.1 in Richtung der Kräfte 50, 59 verhindert wird.

In Fig. 14 kann zusätzlich zu den Endlappen 64.1, 65.1, 66.1 noch der produktionsbedingte Freischnitt 61.1, 62.1, 63.1 und 80.1 erkannt werden. Um den Befestiger 10.1 leichter wieder zu entriegeln, kann am Bolzenkopf 32 eine Betätigung 75 vorgesehen sein, welche den Befestiger durch Drücken in die Entriegelungsposition überführt. Somit kann die Hülse 20.1 des Befestigers 10.1 an seinem vorderen Hülsenende 76.1 leichter vom Gegenprofil 12 getrennt werden. Die Hülse 20.1 selbst kann dann aus dem Profil 11 komplett herausgenommen werden einschließlich dem hinteren Hülsenende 70.1.

Die Fig. 15 bis 18 beschreiben eine andere Ausführungsform des Befestigers 10.1, wobei die Hülse 20.2 etwas schmaler gestaltet ist als in den vorherigen Figuren. Die Hülse 20.2 ist mit ihrem Blechzuschnitt 60.2 in Fig. 18 zu erkennen. Hier sind auch noch einmal alle Elemente des Blechzuschnittes 60.2 zu erkennen, wie die Endklappen 64.2, 65.2, die produktionsbedingten Freischnitte 61.2, 62.2, 63.2 und die Hülsen Nasen 16.2, 17.2. Durch Biegen des Blechzuschnittes 60.2 an den Kanten 22.2, 23.2, 24.2, 25.2 entsteht die in Fig. 17 dargestellte Hülse 20.2 mit dem Hülseninneren 21.2. Auch hierbei werden die Endklappen 64.2, 65.2 abgeschrägt, um mit ihren Endbereichen 26.2, 27.2 mit der in die Hülse 20.2 eingelegte Platte 40.2 zusammenzuwirken. Durch das Biegen ergeben sich dann auch wieder die Breitseiten 35.2, 36.2 sowie die Schmalseiten 37.2, 38.2.

Die entsprechende Platte 40.2 enthält ebenfalls zwei Zungen 41.2, 42.2 mit den entsprechenden Haken 45.2, 46.2 am Außenende 49.2 der Platte 40.2. Die Platte 40.2 besitzt weiterhin die Schrägen 51.2, 52.2, welche durch die Berührungsstellen 55.2, 56.2 und den Endklappen 64.2, 65.2 der Hülse 20.2 die bereits erwähnte Spreizwirkung ausüben.

Die Hülse wird wieder zusammengehalten durch die beiden Kanten 68.2, 69.2, welche im Falle von Fig. 17 durch verbreiterte Köpfe 71.2 und verengte Hälse 72.2 mittels einer Formpassung in Wirkverbindung treten.

Die Hülse 20.2 besteht wieder aus einem vorderen Hülsenende 76.2 und einem hinteren Hülsenende 77.2, wobei am hinteren Hülsenende 77.2 Abwinkelungen 78.2 zur Bewegungsbegrenzung der Platte 40.2 in der Hülse 20.2 vorgesehen sind.

Fig. 19 zeigt letztendlich das am hinteren Hülsenende 77.2 die Abwinkelung 78.3 auch 90° abgewinkelt sein kann und mit einer zweiten Abwinkelung 79 gehalten werden kann. Die zweite Abwinkelung (79) des Blechzuschnitts, welche die als Stütze fungierende doppelte Abwinkelung im Blechzuschnitt erzeugt, wird aus einer Wandverlängerung der Breitwand (36.2) der Hülse (20.3) erzeugt.

In den Zeichnungen zu dem letzten Ausführungsbeispiel (Fig. 20 bis Fig. 27) ist eine abgewandelte Ausführungsform der bereits in den Fig. 15 bis 18 dargestellten Ausführungsform gezeigt. Im dargestellten Ausführungsbeispiel (Fig. 20 bis Fig. 27) ist aber der komplette Befestiger gezeigt und nicht nur die in den Fig. 15 bis 17 dargestellte Hülse, sondern auch die im Hülseninneren vorgesehene profilierte Platte. Eine analoge Platte 40.1, allerdings mit vier Haken 45.1 bis 48.1, ist im ersten Ausführungsbeispiel und zwar in Ausbaulage in den dortigen Fig. 7 bis 9.

Wie am besten aus Fig. 23 zu ersehen ist, setzt sich der Befestiger 10.1 aus drei Bestandteilen zusammen, nämlich einem als einteilige Hülse 20.2 ausgebildeten Gehäuse, einer im Hülseninneren 21.2 angeordneten profilierten Platte 40.2 und einem in der Hülse drehgelagerten Exzenterbolzen 30. Ausweislich der Fig. 26 ist der Anfangsabschnitt der Platte 40.2 in zwei Zungen 41, 42 gegliedert, zwischen denen ein zur analogen Fig. 9 entnehmbarer Plattenausschnitt 29.2 angeordnet ist. Dieser Plattenausschnitt 29.2 dient, in analoger Weise wie Fig. 9 zeigt, zur Ausbildung einer abgewinkelt verlaufenden Blattfeder 28.2. Am äußeren freien Endbereich der beiden Zungen 41.2, 42.2 befindet sich je ein Haken 45.2, 46.2, die zueinander gegensinnig verkröpft sind und im Montagefall, gemäß Fig. 20, aus der Hülse 40.2 herausragen.

Im Gebrauchsfall wird der Befestiger 10.1 mit seiner Hülse 40.2 in einer Aufnahme eines nicht näher gezeigten Profils montiert. Bei dieser Montage wirkt der Exzenterbolzen 30 mit. Der Exzenterbolzen 30 ist, wie Fig. 26 zeigt, mit einer im Hülseninneren 21.1 befindlichen Exzenterscheibe 31 und einem aus der Hülse 20.2 herausragenden Bolzenkopf 32 versehen. Im Hülseninneren 21.2 schließt sich an der Exzenterscheibe 31 ein Drehanschlag 85 und ein Lagerzapfen 34 an, der hier in besonderer, noch näher zu beschreibender Weise in einer hinteren Hülsenwand 36.2 drehgelagert ist, welche von der Breitseite der Hülse 20.2 erzeugt wird. Schauseitig besitzt der Bolzenkopf 32 eine aus Fig. 23 erkennbare Steckaufnahme 83 für ein Steckwerkzeug mit dem im Gebrauchsfall eine in Fig. 23 angedeutete Drehbetätigung 33 des Exzenterbolzens 30 erfolgen kann. All das hat folgende Wirkung.

Ausweislich der Fig. 26 durchsetzt der Exzenterbolzen 30 einen Durchbruch 89 im Innenabschnitt 73.2 der Platte 20.2. Am Innenabschnitt 73.2 stützt sich die Exzenterscheibe 31 flächig ab. Am Platten-Innenabschnitt 73.2 sitzt die bereits erwähnte Blattfeder 28.2, die mit ihrem freien Ende 82 sich im Betriebsfall von Fig. 7 an der Innenfläche 81 der hinteren Hülsenwand 36.2 abstützt. Sie steht unter Federspannung und erzeugt eine im Sinne des Kraftpfeils 84 von Fig. 7 wirkende Federbelastung auf den Bolzenkopf 32. Nach der vorerwähnten Montage in der Profil-Aufnahme schnappt der Bolzenkopf 32 in eine entsprechend dimensionierte Profil-Öffnung. Die Federbelastung 84 lässt sich als "Querkraft" zur Längsverschiebungs-Richtung 86 bezeichnen. Durch diese Querkraft 84 wirkt der Bolzenkopf 32 wie ein "Druckknopf". Zur Demontage des Befestigers 10.1 muss der Bolzenkopf 32 druckknopfartig in Gegenrichtung zur Querkraft 84 ins Hülseninnere zurückgedrückt werden, bis sein Bolzenkopf 32 die Profil-Öffnung freigegeben hat. Dann lässt sich der Befestiger 10.1 aus der Profil-Aufnahme herausziehen.

Im Einbauzustand des Befestigers 10.1 im Profil ragt der Befestiger 10.1 mit seinem in Fig. 20 mit 49.2 gekennzeichneten Außenende aus dem Profil heraus, um damit in eine hinterschnittene Nut eines nicht näher gezeigten Gegenprofils eingesteckt zu werden. Als Einsteckteile fungieren dabei außer den beiden Haken 45.2, 46.2 auch noch zwei im Bereich des Außenendes 49.2 befindliche Hülsennasen 16.1, 16.2. Die Hülsennasen 16.1, 16.2 sind zueinander spiegelbildlich verkröpft, wobei die eine durch eine Verlängerung der Hülsen-Schmalwand 37.2 erzeugt ist und die andere 16.2 durch eine entsprechende Verlängerung der gegenüberliegenden, aus Fig. 20 und 24 ersichtlichen Hülsenschmalwand 38.2.

Der montierte Befestiger 10.1 soll für einen Zusammenhalt zwischen dem Profil und Gegenprofil sorgen, was durch eine kombinierte Spreiz- und Einschubbewegung der beiden endseitigen Haken 45.2, 46.2 erreicht wird. Auslöser dafür ist eine in Fig. 26 und 27 gezeigte Längsverschiebung 86 der Platte 40.2. Dies geschieht durch die vorerwähnte Drehbetätigung 33 des Exzenterbolzens 30. In Fig. 26 ist durch eine Hilfslinie eine Ausschublage 50.1 der Platte 40.2 markiert. In diesem Fall fluchten die beiden spiegelbildlich zueinander verlaufenden Haken 45.2, 46.2 mit den Hülsennasen 16.1, 16.2. Das ist auch aus den Fig. 21 und 24 zu erkennen. In der Ausschublage lässt sich der im Profil montierte Befestiger 10.1 in die Nut des Gegenprofils einstecken oder herausziehen. Die Exzenterscheibe 31 liegt mit ihrem Umfang an einer inneren und einer äußeren Mitnahmeschulter 87, 88 der Platte 40.2 an. Wie Fig. 27 verdeutlicht, sind die Mitnahmeschultern 87, 88 dem erwähnten Plattendurchbruch 89 zugekehrt. Während die äußere Mitnahmeschulter 88 durch eine Delle im Plattenprofil erzeugt ist, wird die innere Mitnahmeschulter von der freien Schenkelkante einer rückgefalteten Schlaufe 91 gebildet.

Durch die erwähnte Drehbetätigung 33 bewegt die Exzentrizität der Exzenterscheibe die Platte 40.2 nach innen. So kommt die erwähnte Längsverschiebung 86 zustande. Nach der Längsverschiebung 86 wird die durch eine weitere Hilfslinie in Fig. 27 veranschaulichte Einschublage 50.2 der Platte 40.2 erreicht. Dabei kommt es zu einer Spreizung der beiden Haken 45.2, 46.2, die quer hinter die erwähnte hinterschnittene Nutwand im Gegenprofil bewegt werden. So entsteht über den Befestiger 10.1 der Zusammenhalt zwischen dem Profil und dem Gegenprofil.

Die im Zuge der Längsverschiebung 86 erfolgende Haken-Spreizung erfolgt durch eine Wechselwirkung zwischen der Platte 40.2 und der Hülse 20.2. Im vorderen Plattenbereich besitzen die beiden Zungen 41.2, 42.2 zwei zueinander gegensinnig verlaufende Schrägen 51.2, 52.2, die sich federnd an jeweils einem von zwei Endlappen 64.3, 65.3 abstützen, wie es aus Fig. 20 und 23 zu erkennen ist. An den freien Kanten der Endlappen 64.3, 65.3 kommt es zu den aus Fig. 20 und 23 erkennbaren Berührungsstellen 55.2, 56.2 der Zungen-Schrägen 51.2, 52.2. Bei der Längsverschiebung 65 kommt es zu der erwähnten Hakenspreizung, weil die Berührungsstellen 55.2, 56.2 an den zueinander gegensinnigen Schrägen 51.2, 52.2 entlang gleiten.

Die Hülse 20.2 entsteht durch ein mehrfaches Abkanten eines Blechzuschnitts, welcher vorzugsweise aus Stahl besteht. So entstehen die Eckbereiche der ein Rechteckprofil aufweisenden Hülse 40.2. Durch diese Rechteckfaltung entstehen im Blechzuschnitt aneinanderstoßende Blechenden 26.2, 27.2. Die beiden Blechenden 26.2, 27.2 bilden die in Fig. 23 erkennbare vordere Hülsenbreitwand 35.2 und besitzen im Bereich der Wandmitte zwei zueinander komplementär verlaufende Kanten 68.2, 69.2 mit einem hinterschnittenen Randprofil. Es kommt zu einem Formschluss der vorderen Hülsenbreitwand 35.2. So entsteht die einstückige rechteckförmig geschlossene Hülse 20.2.

In Verlängerung der beiden Hülsenschmalwände 37.2, 38.2 entstehen, ausweislich der Fig. 21 und 24 jeweils ein Ansatz 78.2. Die beiden Ansätze 78.2 sind gegeneinander abgewinkelt und weisen mit ihren Ansatzenden zueinander, wie aus Fig. 23 hervorgeht. Diese Ansätze 78.2 sind jeweils mit einem angeformten Zapfen 92 versehen, der, wie aus Fig. 20 hervorgeht, in jeweils einem Loch 93 der benachbarten Hülsenbreitwand 36.2 eingreift. Dadurch ist die Winkellage der beiden Ansätze 78.2 stabilisiert.

Diese Ansätze 78.2 haben eine Stützfunktion in der aus Fig. 27 ersichtlichen Einschublage 50.2. In der Einschublage 50.2 stützt sich die Platte 40.2 mit dem Endstück ihres Innenabschnitts 73.2 an der Oberkante der Winkel-Ansätze 78.2 ab. Weil der Exzenterbolzen 30 mit seiner Exzenterscheibe 31 am Innenabschnitt 73.2 anliegt, ist seine Eindrückbewegung ins Hülseninnere 21.2 blockiert. Der Bolzenkopf 32 kann nicht in der erwähnten Gegenrichtung zu seiner Federbelastung 84 von Fig. 26 in der Einschublage 15.2 von Fig. 27 eingedrückt werden. Der erwähnte Druckknopfeffekt vom Bolzenkopf 32 ist unwirksam gesetzt. Dadurch ist der Befestiger 10.1 in seiner Montagelage im Profil gesichert. Damit ist auch der vollzogene Zusammenhalt von Profil und Gegenprofil über den Befestiger 10.1 gesichert.

In Fig. 26 und 27 ist eine Ausgangsposition 82.1 des freien Blattfederendes 28.2 durch eine erste Hilfslinie markiert. Das kennzeichnet die Position der Blattfeder 28.2 in der Einschublage 50.1. Bei der Platten-Längsverschiebung 86 verändert sich auch die Position vom freien Federende 82, wie Fig. 27 zeigt, und kommt in die dort mit einer zweiten Hilfslinie 82.2 markierte Endposition zu liegen. Bei der Längsverschiebung 86 gleitet das Federende 82 über die in Fig. 27 mit 94 gekennzeichneten Stützflächenbereich zwischen den beiden Positionen 82.1, 82.2. In wenigstens einem Teilstück dieses Stützflächenbereichs 94 ist gemäß der Erfindung eine Rampe 95 angeordnet, die in Richtung der Endposition 82.2 ansteigt.

Diese Rampe 95 ist im vorliegenden Fall durch eine Delle 90 in der Hülsenbreitwand 35.2 erzeugt. Die Delle 90 ragt ins Hülseninnere 21.2 und erzeugt mit ihrer vorderen Flanke die gewünschte Rampe 95. In Fig. 26, wo die Ausgangsposition 82.1 der Blattfeder 28.2 vorliegt, befindet sich das freie Federende 82 noch in Abstand zur Rampe 95. Das ändert sich aber in der Endposition 82.2 von Fig. 27. Durch die Wechselwirkung zwischen der geneigt verlaufenden Blattfeder 28.2 und der Rampe 95 ergibt sich eine Berührungsstelle 96, wodurch dort eine längsgerichtete, im Ausschubsinne wirksame Längskraft 97 auf die Platte 40.2 erzeugt wird. Wegen der Rampe 96 hat sich dabei das freie Federende 82 von der Innenfläche 81 der Hülsenbreitwand 36.2 abgehoben, wodurch in Fig. 27 eine höhere Federkraft als in der Ausschublage 50.1 in Fig. 26 herrscht. In der Ausschublage 50.1, wo, wie gesagt, die Ausgangsposition 82.1 vorliegt, nimmt das Federende 82 eine tiefer liegende Berührungslage außerhalb der Delle 90 an der Wandinnenfläche 81 ein.

Die vorerwähnte Längskraft 97 wird bei einer zur Drehbetätigung 33 von Fig. 23 gegensinnigen Rückdrehbewegung des Bolzenkopfs 32 wirksam, wenn sich die Platte 40.2 aus ihrer Einschublage 50.2 von Fig. 27 in Richtung der Ausschublage 50.1 von Fig. 26 bewegt. An den Berührungsstellen 55.2, 56.2 zwischen den Endlappen 64.3 bzw. 65.3 und den Zungenschrägen 51.2 bzw. 52.2 kommt es zu einer Reibung, welche die Auswärtsbewegung und Zusammenklappbewegung der zugehörigen beiden Haken 45.2, 46.2 behindert. Die vorerwähnte Längskraft 97 zwischen Rampe 95 und Blattfeder 28.2 begünstigt diese Auswärtsbewegung. Die Betätigung des Exzenterbolzens 30 wird bei der Erfindung leichtgängig.

Ausweislich der Fig. 20 und 27 ist die Hülsenwand 36.2, welche bereits die rampenerzeugende Delle 90 aufweist, mit einer Eindrückung versehen, die einen zentralen Durchbruch 99 aufweist. Durch die Eindrückung 98 entsteht eine Trichterstruktur in der Hülsenwand 36.2, die das Innenende vom Lagerzapfen 34 des Exzenterbolzens 30 aufnimmt und drehführt.

Wie die Fig. 21 und 24 zeigen, sind die seitlichen Hülsenwände 37.2, 38.2 mit Kerben 100 versehen, die ins Gehäuseinnere weisen. Einer davon ist auch in Fig. 26 zu erkennen. Jede Kerbe 100 hat einen Scheitelbereich 101, an welchem sich gegenüberliegende Schmalseiten der Platte 20.2 im Hülseninneren 21.2 abstützen. Durch diese Berührung im Scheitelbereich 101 erfolgt eine Plattenführung sowohl in der Ruhelage als auch während der erwähnten Längsverschiebung 86. Diese punktuelle Berührung verringert auch den Reibungswiderstand beim Längsverschieben 86. Auch deswegen ist der erfindungsgemäße Befestiger 10.1 bei seiner Drehbetätigung 33 leichtgängig.

### Bezugszeichenliste :

- 10.1: Befestiger
- 11: Profil
- 12: Gegenprofil
- 13: hinterschnittene Nut an 12
- 14: Aufnahme in 11
- 15.1: Hülsenlängsrichtung von 20.1
- 16.1: erste Hülsennase
- 16.2: erste Hülsennase
- 17.1: zweite Hülsennase
- 17.2: zweite Hülsennase
- 20.1: erste Hülse
- 20.2: zweite Hülse
- 20.3: dritte Hülse
- 21.1: Hülseninneres von 20.1
- 21.2: Hülseninneres von 20.2
- 22.1: erste Abkantung von 20.1
- 22.2: erste Abkantung von 20.2
- 23.1: zweite Abkantung von 20.1
- 23.2: zweite Abkantung von 20.2
- 24.1: dritte Abkantung von 20.1
- 24.2: dritte Abkantung von 20.2
- 25.1: vierte Abkantung von 20.1
- 25.2: vierte Abkantung von 20.2
- 26.1: erstes Blechende von 20.1, Randprofil
- 26.2: erstes Blechende von 20.2, Randprofil
- 27.1: zweites Blechende von 20.1, Randprofil
- 27.2: zweites Blechende von 20.2, Randprofil
- 28.1: Blattfeder von 40.1 für 70.1 (Fig. 7)
- 28.2: Blattfeder an 40.2 (Fig. 26, 27)
- 29.1: Plattenausschnitt in 40.1 (Fig. 9)
- 29.2: Plattenausschnitt zwischen 41.2, 42.2 (Fig. 26)
- 30: Exzenterbolzen
- 31: Exzenterscheibe von 30
- 32: Bolzenkopf von 30 (Fig. 1, 23, 27)
- 33: Drehbetätigung von 30 (Fig. 4, 23)
- 34: Lagerzapfen von 30
- 35.1: erste Breitseite von 20.1
- 35.2: erste Breitseite von 20.2
- 36.1: zweite Breitseite von 20.1
- 36.2: zweite Breitseite von 20.2
- 36.3: zweite Breitseite von 20.3 (Fig. 19)
- 37.1: erste Schmalseite von 20.1
- 37.2: erste Schmalseite von 20.2
- 37.3: erste Schmalseite von 20.3 (Fig. 19)
- 38.1: zweite Schmalseite von 20.1
- 38.2: zweite Schmalseite von 20.2
- 38.3: zweite Schmalseite von 20.3 (Fig. 19)
- 39.1: Innenvorsprung, Drehstopp (Fig. 1,4)
- 40.1: Platte für 10.1
- 40.2: Platte (Fig. 26, 27)
- 41.1: erste Zunge von 40.1
- 41.2: Erste Zunge von 40.2
- 42.1: zweite Zunge von 40.1
- 42.2: Zweite Zunge von 40.2
- 43.1: dritte Zunge von 40.1
- 44.1: vierte Zunge von 40.1
- 45.1: erster Haken an 41.1
- 45.2: Erster Haken an 41.2
- 46.1: zweiter Haken an 42.1
- 46.2: Zweiter Haken an 42.2
- 47.1: dritter Haken an 43.1
- 48.1: vierter Haken an 44.1
- 49.1: Außenende von 40.1
- 49.2: Außenende von 10.2
- 50.1: Ausschublage von 40.1
- 50.2: Einschublage von 40.1
- 51.1: erste Schräge an 41.1
- 51.2: Schräge an 41.2
- 52.1: zweite Schräge an 42.1
- 52.2: Schräge an 42.2
- 53.1: dritte Schräge an 43.1
- 54.1: vierte Schräge an 44.1
- 55.1: erste Berührungsstelle für 51.1
- 55.2: erste Berührungsstelle
- 56.1: zweite Berührungsstelle für 52.1
- 56.2: zweite Berührungsstelle
- 57.1: dritte Berührungsstelle für 54.1
- 58: Ausweitungs-Kraft (Fig. 13)
- 59: Ausweitungs-Gegenkraft (Fig. 13)
- 60.1: Blechzuschnitt für 20.1 (Fig. 14)
- 60.2: Blechzuschnitt für 20.2 (Fig. 18)
- 61.1: erster Freischnitt in 60.1
- 61.2: erster Freischnitt in 60.2
- 62.1: zweiter Freischnitt in 60.1
- 62.2: zweiter Freischnitt in 60.1
- 63.1: dritter Freischnitt in 60.1
- 63.2: dritter Freischnitt in 60.1
- 64.1: erster Endlappen an 20.1
- 64.2: erster Endlappen an 20.2
- 64.3: Endlappen an 35.2 (Fig. 23)
- 65.1: zweiter Endlappen an 20.1
- 65.2: zweiter Endlappen an 20.2
- 65.3: Endlappen an 36.2 (Fig. 20)
- 66.1: dritter Endlappen an 20.1
- 68.1: erste Kante von 26.1, Umrissprofil (Fig. 14)
- 68.2: erste Kante von 26.2, Umrissprofil (Fig. 18)
- 69.1: zweite Kante an 27.1, Umrissprofil (Fig. 14)
- 69.2: zweite Kante an 27.2, Umrissprofil (Fig. 18)
- 70.1: Federbelastung von 73/30 (Fig. 3)
- 71.1: verbreiteter Kopf an 68.1 oder 69.1
- 71.2: verbreiteter Kopf an 68.2 oder 69.2
- 72.1: verengter Hals von 68.1 oder 69.1
- 72.2: verengter Hals von 68.2 oder 69.2
- 73.1: Platteninnenabschnitt von 40.1
- 73.2: Innenabschnitt von 20.2 (Fig. 26, 27)
- 75: Druckknopf-Eindrück-Betätigung von 32
- 76.1: vorderes Hülsenende von 20.1
- 76.2: vorderes Hülsenende von 20.2
- 77.1: hinteres Hülsenende von 20.1
- 77.2: hinteres Hülsenende von 20.2
- 78.1: Abwinkelung für Stütze an 37.1 und 38.1
- 78.2: Abwinkelung für Stütze an 37.2 und 38.2
- 78.3: Abwinkelung von 37.3, 38.3 (Fig. 19)
- 79: zweite Abwinkelung für Stütze an 36.3 (Fig. 19)
- 80.1: vierter Freischnitt (Fig. 14)
- 81: Wandinnenfläche von 36.2 (Fig. 26, 27)
- 82: Freies Ende von 28.2 (Fig. 26, 27)
- 82.1: Ausgangsposition von 82 (Fig. 26, 27)
- 82.2: Endposition von 82 (Fig. 27)
- 83: Steckaufnahme in 32 (Fig. 23)
- 84: Kraftpfeil der Federbelastung von 32, Querkraft zu 86 (Fig. 26)
- 85: Drehanschlag an 30 (Fig. 24, 27)
- 86: Pfeil der Längsverschiebung von 40.2 (Fig. 26, 27)
- 87: innere Mitnahmeschulter zwischen 40.2, 31 (Fig. 26)
- 88: Äußere Mitnahmeschulter zwischen 40.2, 31 (Fig. 26)
- 89: Plattendurchbruch in 40.2 für 30 (Fig. 27)
- 90: Delle in 36.2 (Fig. 26, 27)
- 91: Endseitige Schlaufe für 87 (Fig. 23, 27)
- 92: Zapfen an 78.2 (Fig. 20, 21, 24)
- 93: Loch für 92 in 36.2 (Fig. 20)
- 94: Bereich der Stützfläche für 82 (Fig. 27)
- 95: Rampe in 94 für 28.2 (Fig. 26, 27)
- 96: Berührungsstelle zwischen 28.2, 95 (Fig. 27)
- 97: Im Ausschubsinne von 40.2 wirkende Längskraft (Fig. 27)
- 98: Eindrückung in 36.2 für 34, Trichterstruktur (Fig. 20, 27)
- 99: Zentrales Loch in 98
- 100: Kerbe in 37.2, 38.2 (Fig. 21, 24, 26)
- 101: Scheitelbereich von 100 (Fig. 21, 24)

## Patentansprüche

1. Befestiger (10.1) zum lösbaren Verbinden eines Profils (11) an ein Gegenprofil (12)
mit einem in einem Gehäuse drehgelagerten Exzenterbolzen (30), der außer einer im Gehäuseinneren (21.1) befindlichen Exzenterscheibe (31) auch noch einen aus dem Gehäuse herausragenden Bolzenkopf (32) zur Drehbetätigung (33) aufweist,
mit einer Platte (40.1) im Gehäuse, die von der Exzenterscheibe (31) zwischen einer Ausschublage (50.1) und einer Einschublage (50.2) längsverschieblich ist,
mit mindestens einem Haken (45.1) am Außenende (49.1) der Platte (40.1), der aus dem Gehäuse herausragt,
und mit wenigstens einer geneigt zur Längsverschiebung verlaufenden Schräge (51.1) an der Platte (40.1), die sich an einer Berührungsstelle (55.1) des Gehäuses abstützt und beim Einschieben den Haken (45.1) quer hinter die Nutwand im Gegenprofil (12) bewegt,
und mit einem Innenabschnitt (73.1) an der Platte (40.1), der vom Exzenterbolzen (30) durchsetzt wird,
wobei das Gehäuse eine beidendig offene Hülse (20.1) ist, die durch mehrfaches Abkanten (22.1 bis 25.1) eines Blechzuschnitts (60.1) gebildet ist, welcher vorzugsweise aus Stahl besteht,
dass die beiden in der Hülse (20.1) aneinander stoßenden Blechenden (26.1, 27.1) des Blechzuschnitts (60.1) formschlüssig ineinander greifen oder kraftschlüssig miteinander verbunden sind,
dass der Formschluss oder der Kraftschluss der Blechenden (26.1, 27.1) einer beim Überdrehen der Exzenterscheibe (31) sich ergebenden Aufweitung (58, 59) der Hülse (20.1) entgegengerichtet ist und ein Aufbiegen der Abkantungen (22.1 bis 25.1) vom Blechzuschnitt (60.1) verhindert
und dass mindestens an dem vorderen Hülsenende (76.1) wenigstens eine Abbiegung (64.1) von Wandendstücken vorgesehen ist, welche die Berührungsstelle (55.1) für die Platten-Schräge (51.1) erzeugt,
**dadurch gekennzeichnet,**
**dass** das Gehäuse einstückig aus einem Blech geformt ist,
**dass** an den beiden Blechenden (26.1, 27.1) des abgekanteten Blechzuschnitts (60.1) zwei in Hülsenlängsrichtung (15.1) verlaufende Kanten (68.1, 69.1) entstehen, die ineinander greifen und den Formschluss bilden
und **dass** die beiden ineinandergreifenden Kanten (68.1, 69.1) ein hinterschnittenes Randprofil aufweisen, von denen das Randprofil der einen Kante (68.1) komplementär zu demjenigen der anderen Kante (69.1) ausgebildet ist.

2. Befestiger nach Anspruch 1, **dadurch gekennzeichnet, dass** die Hülse (10.1) einen Rechteckquerschnitt aufweist und aus jeweils zwei, einander gegenüberliegenden Breitwänden (35.1, 36.1) und Schmalwänden (37.1, 37.2) besteht,
dass die Abbiegung (64.1) aus einem Endlappen der Breitwand (35.1) gebildet ist, der Endlappen (64.1) gegenüber der angrenzenden Schmalwand (37.1) und/oder einem endseitigen Rest der Breitwand (36.1) freigeschnitten (61.1 bis 63.1; 80.1) ist und mit seinem freien Lappenende geneigt ins Hülseninnere (21.1) verläuft
und dass das Lappenende die Berührungsstelle (55.1) für die Platten-Schräge (51.1) erzeugt.

3. Befestiger nach einem der Ansprüche 1 oder 2, **dadurch gekennzeichnet, dass** die beiden Blechenden (26.1, 27.1) des die Hülse (20.1) bildenden Blechzuschnitts (60.1) in einer gemeinsamen Ebene angeordnet sind und ihr Kantprofil (68.1, 69.1) an den beiden Blechenden (26.1, 27.1) flächenbündig verläuft.

4. Befestiger nach Anspruch 1, **dadurch gekennzeichnet, dass** die beiden ineinander greifenden Kanten (68.1, 69.1) ein komplementäres Mäander-Profil oder ein komplementäres T-Umrissprofil aufweisen,
wobei die Bögen des Mäander-Profils oder die Stufen-Kontur des T-Umrissprofils aus einem verbreiterten Kopf (71.1) mit verengtem Hals (71.2) bestehen.

5. Befestiger nach einem der Ansprüche 1 bis 3, **dadurch gekennzeichnet, dass** die beiden Blechenden des die Hülse (20.1) bildenden Blechstreifens in zwei zueinander senkrechten Ebenen liegen,
und dass der Formschluss der Blechenden in einer Kante der aus dem Blechstreifen erzeugten Hülse (20.1) angeordnet ist.

6. Befestiger nach einem der Ansprüche 2 bis 5, **dadurch gekennzeichnet, dass** die Breitwand (35.1) der Hülse (20.1) mit einem Innenvorsprung (39.1) versehen ist, der als Drehstopp für die Exzenterscheibe (31) dient und ihre Drehung (33) in der Einschublage (50.2) der Platte und/oder der Ausschublage (50.1) begrenzt.

7. Befestiger nach einem der Ansprüche 1 bis 6, **dadurch gekennzeichnet, dass** ein Innenabschnitt (73.1) der Platte (40.1) zur Anlage der Exzenterscheibe (31) dient,
dass eine Kraft vom Platten-Innenabschnitt (73.1) durch Federbelastung (70.1) quer zur Längsverschiebungsrichtung wirkt,
dass die am Platten-Innenabschnitt (73.1) anliegende Exzenterscheibe (31) den Bolzenkopf (32) axial in eine Querbohrung des Profils (11) eindrückt, um den Befestiger (10.1) in einer Montagestellung in der Aufnahme (14) des Profils (11) zu sichern,
dass zur Demontage des Befestigers (10.1) der Bolzenkopf (32) gegen seine Federbelastung (70.1) ins Hülseninnere (21.1) eindrückbar ist, wenn die Platte (40.1) sich in ihrer Ausschublage befindet,
dass am der Abbiegung (64.1 bis 66.1) gegenüberliegenden hinteren Hülsenende (77.1) wenigstens eine Abwinkelung (78.1) des Blechzuschnitts (60.1) vorgesehen ist,
und dass die Abwinkelung (78.1) in der Einschublage der Platte (40.1) als Stütze für das Platten-Innenende (73.1) dient, um die Druckknopfbetätigung des Bolzenkopfs (32) zu blockieren.

8. Befestiger nach Anspruch 7, **dadurch gekennzeichnet, dass** am hinteren Hülsenende (77.3) doppelt übereinanderliegende Abwinkelungen (78.3, 79) des Blechzuschnitts angeordnet sind, die gemeinsam eine Stütze zur Druckknopf-Blockade des Platten-Innenendes bilden.

9. Befestiger nach einem der Ansprüche 1 bis 8, **dadurch gekennzeichnet, dass** am Platten-Innenende (73.2) eine geneigt verlaufende Blattfeder (28.2) sitzt, die den Bolzenkopf (32) quer zur Längsverschiebungs-Richtung (86) aus der Hülse (20.2) herausdrückt, wodurch eine quer gerichtete, am Bolzenkopf (32) wirksame Querkraft (84) entsteht.

10. Befestiger nach Anspruch 9, **dadurch gekennzeichnet, dass** das freie Ende (82) der Blattfeder (28.2) sich an einer Hülseninnenfläche (81) abstützt und beim Längsverschieben (86) der Platte (40.2) an dieser Stützfläche (84) zwischen zwei Positionen (82.1, 82.2) entlang gleitet,
nämlich einer Ausgangsposition (82.1) bei Ausschublage (50.1) der Platte (40.2) und einer Endposition (82.2) in der Einschublage (50.2).

11. Befestiger nach einem der Ansprüche 9 bis 10, **dadurch gekennzeichnet, dass** wenigstens bereichsweise die Stützfläche (94) für das Blattfederende (82) aus einer in Richtung der Endposition (82.2) ansteigenden Rampe (95) besteht
und dass in der Endposition (82.2) das Blattfederende (82) auf der Rampe (95) liegt und die geneigte Blattfeder (28.2) eine längsgerichtete, im Ausschubsinne wirksame Längskraft (97) auf die Platte (40.2) ausübt.

12. Befestiger nach einem der Ansprüche 9 bis 11, **dadurch gekennzeichnet, dass** in der Ausgangsposition (82.1) das Blattfederende (82) an einer Stelle außerhalb der Rampe (95) anliegt, die gegenüber der Endposition (82.2) abgesenkt ist.

13. Befestiger nach einem der Ansprüche 1 bis 12, **dadurch gekennzeichnet, dass** aus mindestens einer hinteren Verlängerung der Hülsenwand (37.2, 38.2) wenigstens ein abgewinkelter Ansatz (78.2) gebildet ist, der mit seinem Ansatzende ins Hülseninnere (21.2) weist
und dass der Ansatz (78.2) in der Einschublage (82.2) der Platte (40.2) als Stütze für das Platten-Innenende dient und eine Druckknopfbetätigung des Bolzenkopfs (32) blockiert,
wodurch eine unerwünschte Demontage der Gehäusehülse (20.2) aus der Aufnahme im Profil verhindert ist.

14. Vorrichtung zum Befestigen eines Profils (11) unter Verwendung eines Befestigers (10.1) nach Anspruch 1 oder 2 an einem Gegenprofil (12), umfessend das Gegenprofil (12) mit einer hinterschnittenen Nut (13) und das Profil (11) mit einer Aufnahme (14) für das Gehäuse des Befestigers (10.1)
**dadurch gekennzeichnet,**
**dass** die Platte (40.1) im Bereich ihres Außenendes (49.1) in mehrere längs verlaufende Zungen (41.1 bis 44.1) gegliedert ist,
**dass** die Zungenendstücke jeweils eine Schräge (51.1 bis 53.1) und einen Haken (45.1 bis 48.1) aufweisen von denen mindestens die eine in der einen Richtung und wenigstens eine andere in dazu gegensätzlicher Richtung verkröpft und abgebogen sind,
**dass** den zueinander gegensinnigen Schrägen (51.1, 54.1; 52.1, 53.1) wenigstens zwei zueinander gegensinnig verlaufende Berührungsstellen (55.1 bis 57.1) der Hülse (20.1) zugeordnet sind,
**dass** die Nut im Gegenprofil (12) von zwei Nutwänden (18,19) begrenzt ist und in der Einschublage (50.2) der Platte (40.1) die Haken (45.1 bis 48.1) hinter zwei Nutwände vom Gegenprofil (12) greifen
und **dass** die zwei Berührungsstellen (55.1 bis 57.1) von den Lappenenden mehrerer Endlappen (64.1 bis 66.1) gebildet sind die von den beiden gegenüberliegenden Breitwänden (35.1, 36.1) der Hülse (20.1) gebildet sind.

15. Vorrichtung nach Anspruch 14, **dadurch gekennzeichnet, dass** der Formschluss der Blechenden (26.1, 27.1) inmitten jener Hülsenwand (36.1) angeordnet ist, die in einer Parallelebene zur Exzenterscheibe (31) verläuft.

## Claims

1. Fastener (10.1) for detachably connecting a profile (11) to a counterprofile (12),
with, rotary-mounted in a casing, an eccentric bolt (30) exhibiting, besides an eccentric disk (31) located in the casing interior (21.1), also a bolt head (32) protruding from the casing for rotary actuation (33),
with, in the casing, a plate (40.1) which is longitudinally moveable by the eccentric disk (31) between a removal position (50.1) and an insertion position (50.2),
with, on the outer end (49.1) of the plate (40.1), at least one hook (45.1) which protrudes from the casing,
and with, on the plate (40.1), at least one bevel (51.1) which runs inclined to the longitudinal shift, is propped on a contact point (55.1) of the casing and moves diagonally behind the groove wall in the counterprofile (12) when the hook (45.1) is inserted,
and with an inner section (73.1) on the plate (40.1) which is penetrated by the eccentric bolt (30),
whereby the casing is a cartridge (20.1) open at both ends and is formed by multiple chamfering (22.1 to 25.1) a pre-cut sheet metal plate (60.1) preferably made of steel,
in that both of the sheet metal plate (60.1) metal plate ends (26.1, 27.1) impacting each other in the cartridge (20.1) grip each other in a form-locked manner or are connected in a force-locked manner,
in that the form-locking or force-locking of the metal plate ends (26.1, 27.1) faces an expansion (58, 59) of the cartridge (20.1) generated when the eccentric disk (31) is jiggered, and prevents the chamfers (22.1 to 25.1) from bending up from the pre-cut sheet metal plate (60.1),
and in that intended for at least the front cartridge end (76.1) is at least one bend (64.1) of wall end pieces which forms the contact point (55.1) for the plate bevel (51.1),
thereby **characterized**
**in that** the casing is integrally formed of one sheet metal plate,
**in that** formed at both metal plate ends (26.1, 27.1) of the beveled pre-cut (60.1) are two edges (68.1, 69.1) which run in the longitudinal direction of the cartridge (15.1) and interlock to form the form-lock,
and **in that** both interlocking edges (68.1, 69.1) have an undercut rim profile, the rim profile of one edge (68.1) designed to be complementary to that of the other edge (69.1).

2. Fastener pursuant to Claim 1, thereby **characterized in that** the cartridge (10.1) has a square cross-section and comprises two broad walls (35.1, 36.1) lying opposite one another and two narrow walls (37.1, 37.2) lying opposite one another,
**in that** the bend (64.1) is formed by an end tab of the broad wall (35.1), the end tab (64.1) opposite the adjacent narrow wall (37.1) and/or a residual piece of the broad wall (36.1) is cut free (61.1 to 63.1; 80.1) and runs with its free tab end inclined into the cartridge interior (21.1),
and **in that** the tab end forms the contact point (55.1) for the plate bevel (51.1).

3. Fastener pursuant to Claim 1 or 2, thereby **characterized in that** both metal plate ends (26.1, 27.1) of the pre-cut sheet metal plate (60.1) which forms the cartridge (20.1) are arranged on a common plane, and their edge profile (68.1, 69.1) runs flush to both metal plate ends (26.1, 27.1).

4. Fastener pursuant to Claim 1, thereby **characterized in that** both of the interlocking edges (68.1, 69.1) have a complementary meander profile or a complementary T-profile,
whereby the arcs of the meander profile or the stepped contour of the T-profile comprise an extended head (71.1) with narrowed neck (71.2).

5. Fastener pursuant to one of the claims 1 to 3, thereby **characterized in that** both metal plate ends of the metal strip forming the cartridge (20.1) lie in two levels which are vertical to one another,
and **in that** the form-locking of the metal plate ends is arranged in an edge of the cartridge (20.1) formed by the metal strip.

6. Fastener pursuant to one of the claims 2 to 5, thereby **characterized in that** the broad wall (35.1) of the cartridge (20.1) is provided with an inner lug (39.1) which serves as a rotational stop for the eccentric disk (31) and limits its rotation in the insert position (50.2) of the plate and/or removal position (50.1).

7. Fastener pursuant to one of the claims 1 to 6, thereby **characterized in that** an inner section (73.1) of the plate (40.1) serves for connecting the eccentric disk (31),
**in that** a force from the inner section of the plate (73.1) acts diagonally to the longitudinal direction of shift by means of spring load (70.1),
**in that** the eccentric disk (31) abutting the inner section of the plate (73.1) presses the bolt head (32) axially into a cross-hole of the profile (11) in order to secure the fastener (10.1) in a mounting position in the holding fixture (14) of the profile (11),
**in that**, for removing the fastener (10.1), the bolt head (32) can be pressed against its spring load (70.1) into the cartridge interior (21.1) when the plate (40.1) is in its removal position,
**in that** provided at the rear cartridge end (77.1) lying opposite the bend (64.1 to 66.1) is at least one bending (78.1) of the pre-cut sheet metal plate (60.1),
and **in that** the bending (78.1), when the plate is in insert position (40.1), acts as a support for the inner section of the plate (73.1) in order to block press-button activation of the bolt head (32).

8. Fastener pursuant to Claim 7, thereby **characterized in that** arranged at the rear cartridge end (77.3) and lying double, one above the other, are bends (78.3, 79) of the pre-cut sheet metal plate which together constitute a support for press-button blockage of the interior end of the plate.

9. Fastener pursuant to one of the claims 1 to 8, thereby **characterized in that** sitting at the interior end of the plate (73.2) is a flat spring (28.2) which presses the bolt head (32) out of the cartridge (20.2) diagonally to the direction of longitudinal shift (86), whereby a diagonally directed diagonal force (84) effective on the bolt head (32) is generated.

10. Fastener pursuant to Claim 9, thereby **characterized in that** the free end (82) of the flat spring (28.2) is propped on a cartridge inner surface (81) and glides along this support surface (84) between two positions (82.1, 82.2) as the plate (40.2) longitudinally shifts (86),
namely, a home position (82.1) for the removal position (50.1) of the plate (40.2) and an end position (82.2) in the insertion position (50.2).

11. Fastener pursuant to one of the claims 9 to 10, thereby **characterized in that**, at least intermittently, the support surface (94) for the flat-spring end (82) constitutes a ramp (95) ascending in the direction of the end position (82.2),
and **in that** in the end position (82.2) the flat-spring end (82) lies on the ramp (95), and the inclined flat spring (28.2) exercises a longitudinally directed longitudinal force (97) on the plate (40.2) which promotes removal.

12. Fastener pursuant to one of the claims 9 to 11, thereby **characterized in that** in the home position (82.1) the flat-spring end (82) abuts a point sunk opposite the end position (82.2) outside the ramp (95).

13. Fastener pursuant to one of the claims 1 to 12, thereby **characterized in that** made up of at least one rear extension of the cartridge wall (37.2, 38.2) is at least one angular attachment (78.2) which with its attachment end faces the cartridge interior (21.2),
and **in that** the attachment (78.2), in the insert position (82.2) of the plate (40.2), acts as a support for the plate interior end and blocks a push-button actuation of the bolt head (32),
whereby an unwanted detachment of the cartridge (20.2) from the holding fixture in the profile is hindered.

14. Device for fastening a profile (11) through use of a fastener (10.1) pursuant to Claim 1 or 2 to a counterprofile (12), encompassing the counterprofile (12) with an undercut groove (13) and the profile (11) with a holding fixture (14) for the casing of the fastener (10.1),
thereby **characterized**
**in that** the plate (40.1), in the area of the outer end (49.1), is divided into several longitudinally running tongues (41.1 to 44.1),
**in that** each tongue piece exhibits a bevel (51.1 to 53.1) and a hook (45.1 to 48.1) of which at least the one is bent to right angles and turned in one direction and at least another likewise in the opposite direction thereto,
**in that** allocated to the mutually inverse bevels (51.1, 54.1, 52.1, 53.1) are at least two contact points (55.1 to 57.1) of the cartridge (20.1) running inversely to each other,
**in that** the groove in the counterprofile (12) is bordered by two groove walls (18, 19), and in the insert position (50.2) of the plate (40.1) the hooks (45.1 to 48.1) grip behind two groove walls of the counterprofile (12),
and **in that** the two contact points (55.1 to 57.1) are made up of the tab ends of several end tabs (64.1 to 66.1) which are formed by the two opposing broad walls (35.1, 36.1) of the cartridge (20.1).

15. Device pursuant to Claim 14, thereby **characterized in that** the form closure of the metal plate ends (26.1, 27.1) is arranged in the middle of that cartridge wall (36.1) which runs in a level parallel to the eccentric disk (31).

## Revendications

1. Dispositif de fixation (10.1) permettant d'assembler un profilé (11) et un contre-profilé (12) de façon libérable
comprenant un goujon excentrique (30) en appui sur palier rotatif dans un carter, lequel goujon présente, hormis un disque excentrique (31) se trouvant à l'intérieur (21.1) du carter, également une tête (32) de goujon faisant saillie hors du carter et officiant de moyen d'actionnement (33) rotatif,
comprenant une plaque (40.1), dans le carter, qui est déplaçable longitudinalement par le disque excentrique (31) entre une position sortie (50.1) et une position rentrée (50.2),
comprenant au moins un crochet (45.1) contre l'extrémité extérieure (49.1) de la plaque (40.1), lequel crochet fait saillie hors du carter,
et comprenant au moins, contre la plaque (40.1), un plan (51.1) présentant un tracé au moins incliné par rapport au déplacement longitudinal, plan qui s'appuie contre un point de contact (55.1) du carter et qui lors du mouvement rentrant déplace le crochet (45.1) transversalement derrière la paroi rainurée dans le contre-profilé (12),
et comprenant un segment intérieur (73.1) contre la plaque (40.1) qui est traversé par le goujon excentrique (30),
sachant que le carter est une douille (20.1) ouverte aux deux extrémités, qui est formée par coudage multiple des bords (22.1 à 25.1) d'une pièce en tôle découpée (60.1), cette tôle découpée étant de préférence en acier,
que les deux extrémités (26.1, 27.1) de tôle aboutant l'une contre l'autre dans la douille (20.1) de la tôle découpée (60.1) engrènent l'une dans l'autre par adhérence de formes ou sont reliées entre elles par adhérence de forces.
que l'adhérence de formes ou l'adhérence de forces des extrémités (26.1, 27.1) de tôle est dirigée en sens opposé à un évasement (58, 59) de la douille (20.1) résultant d'une rotation excessive de la douille excentrique (31), et empêche un bombement des bords coudés (22.1 à 25.1) de la tôle découpée (60.1)
et qu'au moins contre l'extrémité avant (76.1) de douille au moins un coude (64.1) de pièces terminales de paroi est prévu, lequel coude génère la zone de contact (55.1) pour le plan incliné (51.1) de la plaque,
**caractérisé en ce que**
le carter est formé monobloc à partir d'une tôle,
**en ce qu'**aux deux extrémité en tôle (26.1, 27.1) de la tôle découpée à bords repliés (60.1), deux arêtes (68.1, 69.1) circulant dans le sens longitudinal (15.1) de douille sont engendrées qui engrènent l'une dans l'autre et génèrent l'adhérence de formes,
et **en ce que** les deux arêtes (68.1, 69.1) engrenant l'une dans l'autre présentent un profil périmétrique contre-dépouillé, le profil périmétrique d'une arête (68.1) étant complémentaire du profil périmétrique de l'autre arête (69.1).

2. Dispositif de fixation selon la revendication 1, **caractérisé en ce que** la douille (10.1) présente une section rectangulaire et se compose chaque fois de deux parois larges (35.1, 36.1) et de parois minces (37.1, 37.2) se faisant face,
**en ce que** l'incurvation (64.1) est formée à partir d'un lobe terminal de la paroi large (35.1), **en ce que** le lobe terminal (64.1) en face de la paroi étroite limitrophe (37.1) et/ou un reliquat terminal de la paroi large (36.1) a reçu une coupe de dégagement (61.1 à 63.1 ; 80.1), et que le lobe pénètre de façon inclinée, par son extrémité libre, à l'intérieur de la douille (21.1)
et **en ce que** l'extrémité du lobe génère la zone de contact (55.1) pour le plan incliné (51.1) de la plaque.

3. Dispositif de fixation selon l'une des revendications 1 ou 2, **caractérisé en ce que** les deux extrémités (26.1, 27.1) de la tôle découpée (60.1) formant la douille (20.1) sont disposées sur un plan conjoint et **en ce que** le profil (68.1, 69.1) présente un tracé en affleurement jointif aux deux extrémités (26.1, 27.1) de la tôle.

4. Dispositif de fixation selon la revendication 1, **caractérisé en ce que** les deux arêtes (68.1, 69.1) engrenant l'une dans l'autre présentent un profil complémentaire en méandres, ou un profil complémentaire en T,
sachant que les coudes du profil en méandres ou le contour étagé du profil en T se composent d'une tête élargie (71.1) avec col étroit (71.2).

5. Dispositif de fixation selon l'une des revendications 1 à 3, **caractérisé en ce que** les deux extrémités de la bande de tôle formant la douille (20.1) se situent sur deux plans perpendiculaires l'un par rapport à l'autre,
et **en ce que** la liaison par adhérence de formes entre les extrémités de la tôle est agencée dans une arête de la douille (20.1) formée à partir de la bande en tôle.

6. Dispositif de fixation selon l'une des revendications 2 à 5, **caractérisé en ce que** la paroi large (35.1) de la douille (20.1) est dotée d'une protubérance interne (39.1) servant de butée à la rotation du disque excentrique (31) et limitant sa rotation (33) lorsque la plaque se trouve en position rentrée (50.2) et/ou en position sortie (50.1).

7. Dispositif de fixation selon l'une des revendications 1 à 6, **caractérisé en ce que** le segment intérieur (73.1) de la plaque (40.1) sert à faire appliquer le disque excentrique (31),
**en ce qu'**une force exercée par le segment interne (73.1) de la plaque agit par contrainte ressort (70.1) transversalement au sens de déplacement longitudinal,
**en ce que** le disque excentrique (31) appliquant contre le segment intérieur (73.1) de la plaque enfonce la tête de goujon (32) axialement dans un alésage transversal du profil (11) pour sécuriser le dispositif de fixation (10.1) dans une position de montage dans le réceptacle (14) du profilé (11),
**en ce que** pour démonter le dispositif de fixation (10.1) la tête de goujon (32) se laisse enfoncer à l'intérieur (21.1) de la douille, en vainquant sa contrainte ressort (70.1), lorsque la plaque (40.1) se trouve dans sa position sortie,
**en ce qu'**à l'extrémité arrière (77.1) de la douille située en face de l'incurvation (64.1 à 66.1) est prévu au moins un coude (78.1) de la tôle découpée (60.1),
et **en ce que** le coude (78.1), lorsque la plaque (40.1) est en position rentrée, sert d'appui à l'extrémité intérieure (73.1) de la plaque afin de bloquer l'actionnement, par bouton-poussoir, de la tête (32) de goujon.

8. Dispositif de fixation selon la revendication 7, **caractérisé en ce qu'**à l'extrémité arrière (77.3) de la douille sont disposés des coudes (78.3, 79) en double superposition de la tôle découpée, coudes qui forment ensemble un appui pour bloquer le bouton-poussoir à l'extrémité intérieure de plaque.

9. Dispositif de fixation selon l'une des revendications 1 à 8, **caractérisé en ce qu'**à l'extrémité intérieure (73.2) de la plaque est en assise un ressort à lame (28.2) présentant un tracé incliné, ressort qui chasse la tête (32) de goujon hors de la douille (20.2) transversalement au sens longitudinal (86) de déplacement, ce qui engendre une force (84) de sens transversal agissant contre la tête de goujon (32).

10. Dispositif de fixation selon la revendication 9, **caractérisé en ce que** l'extrémité libre (82) du ressort à lame (28.2) s'appuie contre une surface intérieure (81) de la douille et, lors du déplacement longitudinal (86) de la plaque (40.2), glisse le long de cette surface d'appui (84) entre deux positions (82.1, 82.2),
à savoir entre une position de départ (82.1) lorsque la plaque (40.2) se trouve en position sortie (50.1), et une position terminale (82.2) lorsqu'elle se trouve en position rentrée (50.2).

11. Dispositif de fixation selon l'une des revendications 9 et 10, **caractérisé en ce qu'**au moins localement la surface (94) sur laquelle s'appuie l'extrémité (82) du ressort à lame se compose d'une rampe (95) montant en direction de la position finale (82.2)
et en ce dans la position finale (82.2) l'extrémité (82) du ressort à lame repose sur la rampe (95) et le ressort à lame (28.2) incliné exerce une force (97) de sens longitudinal sur la plaque (40.2), force qui agit dans le sens sortant.

12. Dispositif de fixation selon l'une des revendications 9 à 11, **caractérisé en ce que** dans la position de départ (82.1), l'extrémité (82) du ressort à lame applique à un endroit, en dehors de la rampe (95), abaissé par rapport à la position finale (82.2).

13. Dispositif de fixation selon l'une des revendications 1 à 12, **caractérisé en ce qu'**au moins un appendice (78.2) coudé est formé à partir d'au moins une prolongation arrière de la paroi (37.2, 38.2) de douille, appendice dont l'extrémité regarde vers l'intérieur (21.2) de la douille
et **en ce que** l'appendice (78.2) sert d'appui à l'extrémité intérieure de la plaque (40.2) lorsque cette dernière se trouve en position rentrée (82.2), et bloque l'actionnement par bouton-poussoir de la tête (32) de goujon,
ce qui empêche le démontage indésirable de la douille (20.2) du carter hors du réceptacle dans le profilé.

14. Dispositif servant à fixer un profilé (11) - en utilisant un dispositif de fixation (10.1) selon la revendication 1 ou 2 - contre un contre-profilé (12), comprenant ledit contre-profilé (12) avec une gorge (13) contre-dépouillée, et le profilé (11) avec un réceptacle (14) pour le carter du dispositif de fixation (10.1)
**caractérisé en ce que**
la plaque (40.1) est subdivisée, dans la zone de son extrémité extérieure (49.1), en plusieurs languettes (41.1 à 44.1) d'un tracé longitudinal,
les extrémités des languettes présentent chacune un plan incliné (51.1 à 53.1) et un crochet (45.1 à 48.1), dont au moins une est coudée et incurvée dans une direction, et au moins une autre est coudée et incurvée dans la direction opposée,
aux surfaces inclinées (51.1, 54.1 ; 52.1, 53.1) réciproquement en sens contraires sont assignés deux points de contact (55.1 à 57.1), réciproquement en sens contraires, de la douille (20.1),
la gorge dans le contre-profilé (12) est limitée par deux parois (18, 19) de gorge et **en ce que** les crochets (45.1 à 48.1) engrènent derrière deux parois de gorge du contre-profilé (12) lorsque la plaque (40.1) se trouve en position rentrée (50.2),
et **en ce que** les deux points de contact (55.1 à 57.1) sont formés par les extrémités de plusieurs lobes terminaux (64.1 à 66.1), qui sont formées par les deux parois larges (35.1, 36.1), se faisant face, de la douille (20.1).

15. Dispositif selon la revendication 14, **caractérisé en ce que** l'adhérence de formes des extrémités (26.1, 27.1) de la tôle est agencée au milieu de la paroi (36.1) de douille dont le tracé se situe sur un plan parallèle au disque excentrique (31).
